# EUROPÄISCHE PATENTSCHRIFT

(11) **EP 4 126 612 B1**
(45) Veröffentlichungstag und Bekanntmachung des Hinweises auf die Patenterteilung: **29.11.2023**
(21) Anmeldenummer: 21717355.8
(22) Anmeldetag: 31.03.2021
(51) Int. Cl.: B60T 8/40

(54) **HYDRAULIKANORDNUNG IN EINEM BREMSSYSTEM EINES KRAFTFAHRZEUGS SOWIE KRAFTFAHRZEUG**
HYDRAULIC ARRANGEMENT IN A BRAKE SYSTEM OF A VEHICLE AND VEHICLE
ARRANGEMENT HYDRAULIQUE DANS UN SYSTÈME DE FREINS D'UN VÉHICULE ET VÉHICULE

(30) Priorität: 03.04.2020 DE 102020204342
(43) Veröffentlichungstag der Anmeldung: 08.02.2023
(73) Patentinhaber: VOLKSWAGEN AKTIENGESELLSCHAFT, 38440 Wolfsburg (DE)
(72) Erfinder: VÖLPEL, Aaron, 38179 Schwülper (DE); KESSLER, Steffen, 38442 Wolfsburg (DE); BALLHAUSEN, Björn, 38444 Wolfsburg (Heiligendorf) (DE); STEBNER, Frank, 38108 Braunschweig (DE)
(86) Internationale Anmeldenummer: PCT/EP2021/058456
(87) Internationale Veröffentlichungsnummer: WO 2021/198344

(56) Entgegenhaltungen:
- DE-A1-102006 019 040
- DE-A1-102008 047 303
- DE-A1-102014 224 828
- DE-A1-102016 217 273
- US-A1- 2012 299 367

## Beschreibung

Die Erfindung betrifft eine Hydraulikanordnung in einem Bremssystem eines Kraftfahrzeugs gemäß dem Oberbegriff des Patentanspruchs 1. Die Erfindung betrifft auch ein Kraftfahrzeug.

Eine Hydraulikanordnung ist aus der DE 10 2013 224 783 A1 bekannt geworden. Konkret wird dort ein Bremssystem für ein Kraftfahrzeug mit zwei Achsen vorgeschlagen, wobei die Räder einer Antriebsachse mit einem elektrischen Antrieb verbunden sind. Der elektrische Antrieb weist eine als Motor oder Generator betreibbare, elektrische Maschine auf. Das Bremssystem hat einen ersten hydraulischen Bremskreis mit zwei Radbremsen, die mit einem vom Fahrer über ein Bremspedal betätigbaren Hauptbremszylinder verbunden sind. Ein zweiter hydraulischer Bremskreis mit zwei Radbremsen ist lediglich mit einer autonomen Druckquelle hydraulisch verbunden, wobei die Radbremsen des zweiten Bremskreises der Antriebsachse zugeordnet sind. Die autonome Druckquelle ist durch eine von einem Elektromotor angetriebene Kolbenpumpe gebildet. Des Weiteren sind die Radbremsen der nicht angetriebenen Achse jeweils mit einem zusätzlichen Bremssattel ausgestattet, der über einen dritten hydraulischen Bremskreis ebenfalls von einer elektrisch angetriebenen Pumpe betätigt wird.

In der DE 10 2008 047 303 A1 wird eine Pulsationsdämpfungskapsel beschrieben, welche Bestandteil einer Dämpfungsvorrichtung in einer elektrohydraulischen Regelungseinheit eines elektronisch geregelten Bremssystems sein kann. Die in der Dämpfungsvorrichtung verbauten Pulsationsdämpfungskapseln weisen eine derartige Kompressibilität auf, dass ein bestimmtes Hydraulikvolumen innerhalb einer Dämpferkammer aufgenommen werden kann.

Aus der die Merkmale vom Oberbegriff des Patentanspruchs 1 bildenden DE 10 2014 224 828 A1 ist ein Druckänderungsdämpfer für eine bremskraftgeregelte, hydraulische Fahrzeugbremsanlage mit einem domförmigen Dämpfergehäuse bekannt. In dem Dämpfergehäuse ist ein schlauchförmiges Dämpferelement aus einem Elastomer angeordnet. Ein offenes Ende des Dämpferelements ist mit einer ringförmigen Fassung an einem offenen Ende des Dämpfergehäuses befestigt und die Fassung umlaufend fluiddicht und druckfest mit dem Dämpfergehäuse verschweißt. In einem axialen Durchgangsloch in einem Dämpferfuß sind ein federbeaufschlagtes Rückschlagventil und in dessen Absperrkörper ein federloses Rückschlagventil angeordnet.

Aus der DE 10 2006 019 040 A1 ist schließlich ein elektrohydraulisches Bremssystem für Kraftfahrzeuge vom Typ "Brake-by-Wire" bekannt. Das Bremssystem weist u.a. einen mit einem Hauptbremszylinder zusammenwirkenden Wegsimulator, sowie eine durch eine hydraulische Pumpe und einen Hochdruckspeicher gebildete Druckquelle auf. Um bei einem Ausfall der elektrohydraulischen Komponenten des Bremssystems eine Abbremsung des Fahrzeuges mit Bremsdrücken zu ermöglichen, die größer sind als der durch die Muskelkraft des Fahrzeugführers im Hauptbremszylinder vorgegebene Druck, sind in der Wirkungskette zwischen der Druckquelle und den Radbremsen eine Ventilanordnung sowie mindestens eine Zylinder-Kolben-Anordnung vorgesehen. Dabei ist die Ventilanordnung sowohl hydraulisch durch den vom Hauptbremszylinder bereitgestellten Druck als auch elektrisch steuerbar ausgebildet. Die Zylinder-Kolben-Anordnung ist durch den von der Ventilanordnung bereitgestellten Druck oder durch den vom Hauptbremszylinder bereit gestellten Druck betätigbar.

Insbesondere im Rahmen der Entwicklung von Radbremsen an einem Elektrofahrzeug steht man vor der Herausforderung, mit einer dem Fahrzeug entsprechenden Dimensionierung der Radbremsen diese geräuscharm umzusetzen. Gerade bei Elektrofahrzeugen ist auf Grund der fehlenden Motorbremsung durch den Wegfall eines Verbrennungsmotors eine Höherdimensionierung der Radbremsen erforderlich. Auf Grund einer solchen Höherdimensionierung und auf Grund von Dickenschwankungen der Bremsscheiben im Fall von Scheibenbremsen oder bei Unrundheiten der Bremstrommeln im Fall von Trommelbremsen, kommt es beim Bremsvorgang zu auffällig hohen Druckschwankungen. Diese Druckschwankungen wiederum führen zu unangenehm lauten, tiefenfrequenten Bremsgeräuschen (sogenanntes Bremsenrubbeln). Bei diesem Bremsenrubbeln handelt es sich um Geräusche in einem Frequenzbereich von deutlich unter einem kHz, insbesondere unter 500 Hz.

Der vorliegenden Erfindung liegt die Aufgabe zu Grunde, eine Hydraulikanordnung in einem Bremssystem eines Kraftfahrzeugs bereitzustellen, bei dem tieffrequente Bremsgeräusche vermindert werden können und die bei einem kompakten und funktionssicheren Aufbau einen hohen Wirkungsgrad aufweist.

Vorgenannte Aufgabe wird mit einer Hydraulikanordnung mit den Merkmalen von Patenanspruch 1 gelöst. Vorteilhafte Ausbildungen beziehungsweise Weiterbildungen der Erfindung sind den jeweiligen Unteransprüchen zu entnehmen.

Dabei geht die Erfindung von einer Hydraulikanordnung in einem Bremssystem eines Kraftfahrzeugs aus. Das Bremssystem kann ein aus mehreren Bremskreisen bestehendes Bremssystem sein. Üblich bei Personenkraftwagen ist der Einsatz von Bremssystemen mit zwei Bremskreisen.

Die Hydraulikanordnung innerhalb des Bremssystems weist wenigstens eine Radbremse auf, die als Scheiben- oder auch als Trommelbremse ausgebildet sein kann. Die Radbremse ist hydraulisch mit einem Hauptbremszylinder verbunden. Der Hauptbremszylinder ist durch Betätigung eines Bremspedals betätigbar oder kann dadurch betätigt werden. Dadurch ist Druckmittel (bspw. Bremsflüssigkeit) zum Aufbau eines Bremsdrucks in einen Radbremszylinder der Radbremse überführbar.

Ferner ist in der zwischen dem Hauptbremszylinder und der Radbremse bestehenden, hydraulischen Wirkverbindung wenigstens ein federelastisches Element angeordnet, welches in Kontakt mit dem Druckmittel steht.

Auf diese Weise ist es möglich, dass tieffrequente Bremsgeräusche, welche durch Bremsdruckschwankungen hervorgerufen werden, reduziert werden können. Insbesondere wird durch das federelastische Element dem hydraulischen Bremssystem Energie entzogen.

Da das Druckmittel in ständigem Kontakt mit dem federelastischen Element steht, können bei auftretenden Druckschwankungen diese unmittelbar vom federelastischen Element aufgenommen werden. So wird Druckenergie des Druckmediums in eine elastische Verformungsenergie des federelastischen Elements umgesetzt.

Das federelastische Element kann zur Erzielung seiner federelastischen Eigenschaften beispielsweise aus einem Elastomer sein. Es ist auch denkbar, dass das federelastische Element aus einem Metall besteht, wobei die Aufzählung als nicht abschließend zu betrachten ist.

Es wird ferner vorgeschlagen, dass in der zwischen dem Hauptbremszylinder und der Radbremse bestehenden, hydraulischen Wirkverbindung zusätzlich wenigstens eine Strömungsquerschnittsverengung vorhanden ist. Die Strömungsquerschnittsverengung kann beispielsweise als Blende ausgebildet sein. Durch die zusätzliche Einbringung einer Strömungsquerschnittsverengung kann eine Glättung des durch Druckschwankungen erzeugten Druckprofils erzielt werden.

In einer höchst zweckmäßigen Ausbildung des Erfindungsgedankens wird durch das federelastische Element gleichzeitig auch die Strömungsquerschnittsverengung ausgebildet.

Nach Merkmalen der Erfindung sind das federelastische Element und die Strömungsquerschnittsverengung in einem gemeinsamen Dämpfungsbauteil integriert.

Eine derartige Weiterbildung trägt zum kompakten und funktionssicheren Aufbau der Hydraulikanordnung bei.

Um eine möglichst große Wirkung mit dem Dämpfungsbauteil zu erzielen, wird vorgeschlagen, dass das Dämpfungsbauteil in einer hydraulischen Wirkverbindung zwischen einer elektrohydraulischen Regelungseinheit und der Radbremse angeordnet ist.

Nach weiteren Merkmalen der Erfindung wird vorgeschlagen, dass das Dämpfungsbauteil in einem starren Anschlussstutzen (sogenannter Banjo) angeordnet ist, welcher eine flexible Bremsleitung mit einem Hydraulikzulauf des Radbremszylinders verbindet. Auf diese Weise kann der erwünschte Wirkungsgrad des Dämpfungsbauteils weiter erhöht werden.

Zur Integration des Dämpfungsbauteils in die Hydraulikanordnung, beispielsweise im Radbremszylinder, ist es von Vorteil, wenn das Dämpfungsbauteil wenigstens ein im Umriss kreisrundes, federelastisches Element aufweist. Das federelastische Element ist vorzugsweise scheibenartig ausgebildet. Seine Flächenerstreckung ist also um ein Mehrfaches größer als seine Dicke senkrecht zu seiner Flächenerstreckung.

Es kann zur genaueren Einstellung einer bestimmten Dämpfungscharakteristik auch vorteilhaft sein, wenn das Dämpfungsbauteil mehrere von solchen im Umriss kreisrunden, federelastischen Elementen aufweist. Diese sind dann vorzugsweise nebeneinander angeordnet.

Schließlich soll mit der Erfindung auch ein Kraftfahrzeug unter Schutz gestellt werden, welches wenigstens eine erfindungsgemäße Hydraulikanordnung aufweist.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: ein Wirkschaubild einer nicht von der Erfindung umfassten Hydraulikanordnung,
- Fig. 2: ein Wirkschaubild einer Hydraulikanordnung gemäß einem Ausführungsbeispiel der Erfindung,
- Fig. 3: eine perspektivische Darstellung eines Radträgers mit einer Radbremse, mit einer ersten, nicht von der Erfindung umfassten Anordnung eines Dämpfungsbauteils,
- Fig. 4: eine perspektivische Darstellung eines Radträgers mit einer Radbremse, mit einer erfindungsgemäßen Anordnung eines Dämpfungsbauteils und
- Fig. 5: eine Längsschnittdarstellung eines nicht von der Erfindung umfassten Radbremszylinders, in den zwei Dämpfungsbauteile integriert sind.

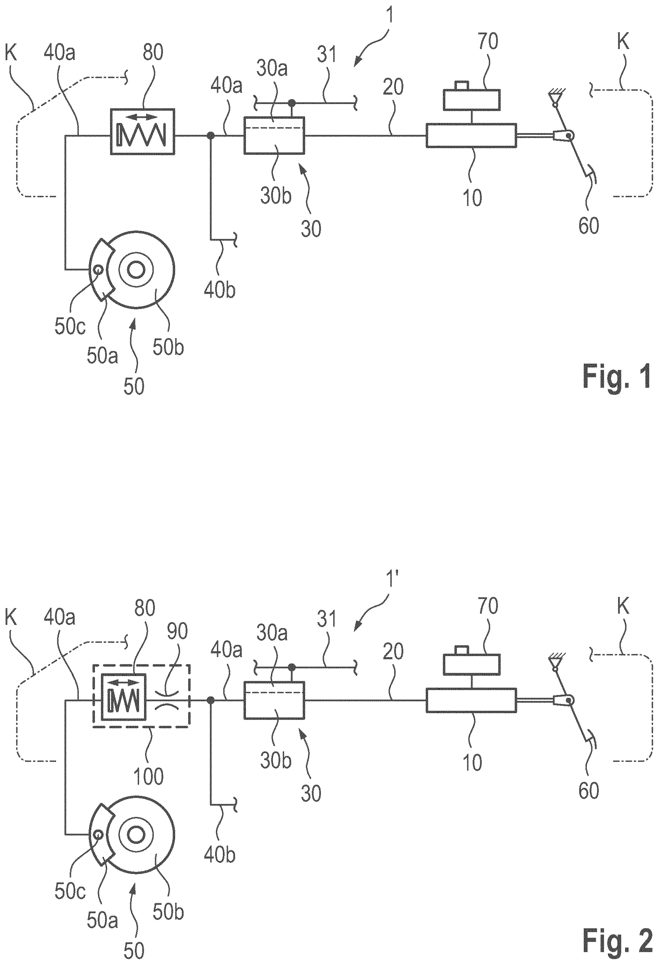

Es wird zunächst auf die Fig. 1 Bezug genommen. In dieser Figur ist eine Hydraulikanordnung 1 gezeigt, die einen Bestandteil von einem Bremssystem eines Kraftfahrzeugs K ausbildet. Das Bremssystem ist vorzugsweise ein aus mehreren Bremskreisen bestehendes Bremssystem.

In der dargestellten Hydraulikanordnung 1 ist ein Hauptbremszylinder 10 ersichtlich, welcher über eine Hydraulikleitung 20 mit einer elektrohydraulischen Regelungseinheit 30 verbunden ist. Die elektrohydraulische Regelungseinheit 30 dient im Bremssystem des Kraftfahrzeugs K zur Realisierung einer Fahrzeugstabilisierung, also beispielsweise zur Realisierung der Funktionen eines Antiblockiersystems (ABS), einer Antischlupfregelung (ASR) sowie zur Verhinderung eines Ausbrechens des Kraftfahrzeugs.

Die elektrohydraulische Regelungseinheit 30 weist eine elektrische Steuereinheit (ECU) 30a und eine hydraulische Steuereinheit (HCU) 30b auf. Die elektrische Steuereinheit 30a ist signal- und steuerungstechnisch über einen Datenbus 31 mit Sensoren und anderen Steuergeräten verbunden, über die die elektrische Steuereinheit 30a Daten und Signale zur Fahrzeugstabilisierung erhalten beziehungsweise aussenden kann. Dies ist jedoch bekannt und nicht Gegenstand der vorliegenden Erfindung.

Die hydraulische Steuereinheit 30b ist über eine Bremsleitung 40a mit einer Radbremse 50 verbunden. Die Radbremse 50 ist im vorliegenden Ausführungsbeispiel als Scheibenbremse ausgebildet und weist einen Bremssattel 50a mit einem Radbremszylinder 50c auf, der über die hydraulische Steuereinheit 30b in einer hydraulischen Wirkverbindung mit dem Hauptbremszylinder 10 bzw. dem Bremspedal 60 steht.

Wird von einem Fahrer das Bremspedal 60 betätigt, so wird ein Kolben im Hauptbremszylinder 10 bewegt, so dass ein Druckmittel (Bremsflüssigkeit) in den Radbremszylinder 50c überführt wird, darin ein Druck aufgebaut wird und dadurch nicht näher dargestellte Bremsbeläge auf eine Bremsscheibe 50b bremsend wirken.

Die in der Hydraulikanordnung 1 bestehende, hydraulische Wirkverbindung vom Bremspedal 60 bis hin zur Radbremse 50 wirkt auch umgekehrt, also von der Radbremse 50 hin zum Bremspedal 60.

Um nun den Fahrkomfort für den Fahrer beziehungsweise für Fahrzeuginsassen mechanisch und auch akustisch zu verbessern, ist gemäß der vorliegenden Erfindung in der zwischen dem Hauptbremszylinder 10 und der Radbremse 50 bestehenden, hydraulischen Wirkverbindung wenigstens ein federelastisches Element 80 angeordnet. Das federelastische Element 80 hat also ständigen Wirkkontakt mit dem in der Hydraulikanordnung 1, konkret in der Bremsleitung 40a befindlichen Druckmittel.

Dies führt dazu, dass Druckschwankungen, welche beispielsweise durch Unebenheiten der Bremsscheibe 50b in der Bremsleitung 40a bei einem Bremsvorgang hervorgerufen werden können, in ihrer Intensität abgebaut werden. Mit anderen Worten können auftretende Druckschwankungen durch das federelastische Element 80 reduziert werden, da durch das federelastische Element 80 dem hydraulischen Bremssystem Energie entzogen wird.

Hierdurch können Bewegungen des Bremspedals 60 und auch tieffrequente Geräusche, welche durch auftretende Druckschwankungen im Bremssystem verursacht werden können, vermieden oder zumindest spürbar reduziert werden.

Mit 40b ist eine weitere Bremsleitung beziffert und angedeutet, welche zu einer anderen, nicht dargestellten Radbremse im gleichen Bremskreis des Kraftfahrzeugs K führt. Weitere notwendige Bauteile im Bremssystem des Kraftfahrzeugs K sind hier nicht dargestellt.

Über einen Vorratsbehälter 70 wird der Hauptbremszylinder 10 mit einem geeigneten Druckmittel, insbesondere mit Bremsflüssigkeit, versorgt.

In der Fig. 2 ist nun ein Ausführungsbeispiel einer erfindungsgemäßen Hydraulikanordnung 1' dargestellt. Im Unterschied zur Hydraulikanordnung 1 gemäß Figur 1 weist die Hydraulikanordnung 1' zusätzlich zum federelastischen Element 80 noch eine Strömungsquerschnittsverengung 90 (bspw. eine Blende) in der Bremsleitung 40a auf, welche vorzugsweise zwischen der elektrohydraulischen Regelungseinheit 30 und dem federelastischen Element 80 angeordnet ist.

Dabei hat das federelastische Element 80 die Aufgabe, die Energie der in der Radbremse 50 verursachten Druckschwankungen abzubauen, während die Strömungsquerschnittsverengung 90 zu einer Glättung der hervorgerufenen Druckschwankungen dient.

Wie gestrichelt angedeutet ist, sind das federelastische Element 80 und die Strömungsquerschnittsverengung 90 in einem gemeinsamen Dämpfungsbauteil 100 integriert. Es ist möglich, dass durch das federelastische Element 80 gleichzeitig auch die Strömungsquerschnittsverengung 90 ausgebildet wird. Denkbar ist auch, durch ein Gehäuse des Dämpfungsbauteils 100 die Strömungsquerschnittsverengung 90 zu realisieren.

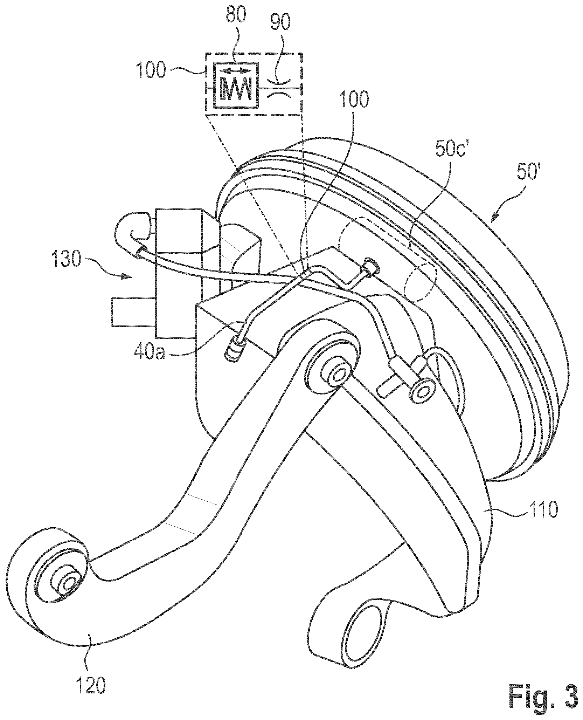

Anhand der Fig. 3 ist eine Radbremse 50' dargestellt, welche als Trommelbremse ausgebildet ist und Bestandteil einer Hydraulikanordnung sein kann. Die Radbremse 50' ist an einem Radträger 110 befestigt und weist einen gestrichelt angedeuteten Radbremszylinder 50c' auf. Der Radträger 110 ist an einem Querlenker 120 aufgehängt. Ferner ist in der Figur eine elektromechanische Parkbremse 130 ersichtlich.

Wesentlich ist hier, dass in der vom Radbremszylinder 50c' abgehenden Bremsleitung 40a, welche im vorliegenden Ausführungsbeispiel als starre Bremsleitung ausgebildet ist, das Dämpfungsbauteil 100 integriert wurde. Das Dämpfungsbauteil 100 besteht hier aus dem federelastischen Element 80 und der Strömungsquerschnittsverengung 90.

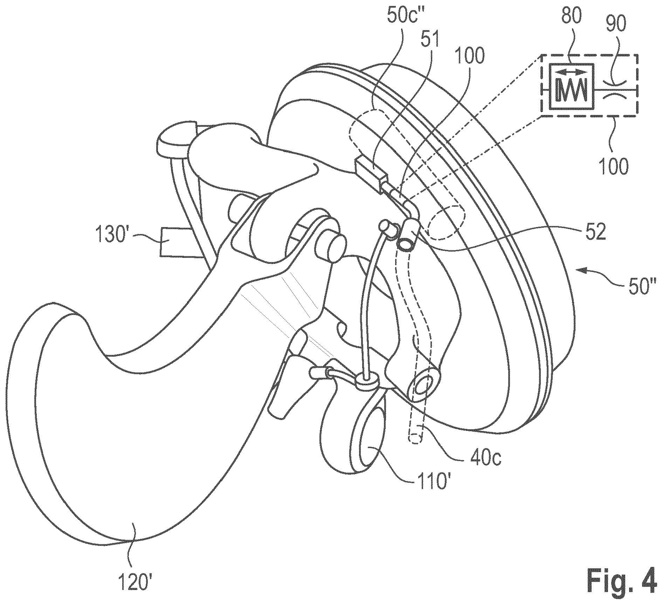

Anhand der Fig. 4 ist eine Radbremse 50" ersichtlich, welche ebenfalls als Trommelbremse ausgebildet ist und Bestandteil einer erfindungsgemäßen Hydraulikanordnung sein kann. Die Radbremse 50" weist einen gestrichelt angedeuteten Radbremszylinder 50c" auf. Auch hier ist ein Radträger 110' ersichtlich, an welchem die Radbremse 50" befestigt und welcher an einem Querlenker 120' aufgehängt ist. Eine elektromechanische Parkbremse ist hier mit dem Bezugszeichen 130' versehen.

Im Unterschied zur Radbremse 50' nach Fig. 3 ist bei der Radbremse 50" der Radbremszylinder 50c" beziehungsweise ein Hydraulikzulauf 51 des Radbremszylinders 50c" nach außen hin mit einem starren Anschlussstutzen 52 (sogenannter Banjo) versehen, der zum Anschluss beziehungsweise zur Befestigung einer flexiblen, gestrichelt angedeuteten Bremsleitung 40c dient. Insbesondere wird die flexible Bremsleitung 40c mit dem Anschlussstutzen 52 verquetscht.

Wesentlich für dieses Ausführungsbeispiel ist nun, dass in den starren Anschlussstutzen 52 das Dämpfungsbauteil 100, also das federelastische Element 80 und die Strömungsquerschnittsverengung 90 integriert sind.

Durch eine derartige Lösung kann das Dämpfungsbauteil 100 sehr dicht an die Quelle von störenden Druckschwankungen, also sehr dicht am Radbremszylinder 50c" angeordnet werden. Durch eine Integration in den ohnehin verwendeten Anschlussstutzen 52 kann die Kompaktheit der ersichtlichen Anordnung begünstigt werden.

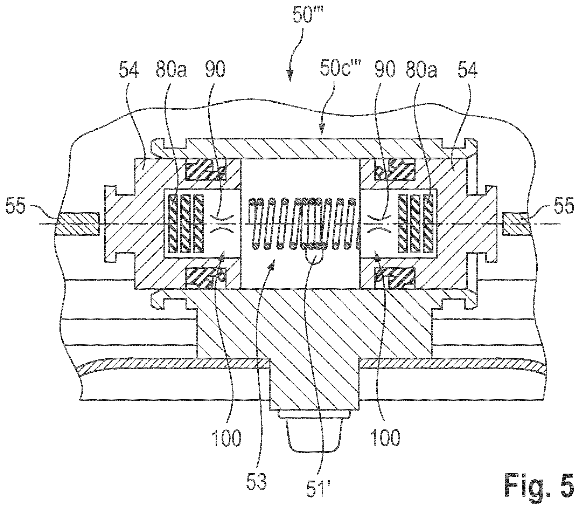

Schließlich ist anhand der Fig. 5 eine Lösung ersichtlich, bei der Dämpfungsbauteile 100 unmittelbar in einen Radbremszylinder 50c‴ einer Radbremse 50‴ integriert sind.

Die Radbremse 50‴ ist ebenfalls als Trommelbremse ausgebildet, wobei außer dem Radbremszylinder 50c‴ nur noch Teile von Bremsbacken 55 und ein Teil eines Gehäuses 56 der Trommelbremse ersichtlich sind.

Wie aus der Figur erkennbar ist, weist der Radbremszylinder 50c‴ zwei Kolben 54 auf, die bei steigendem Volumen eines Druckmittels in einer Druckkammer 53 gegen die Bremsbacken 55 drücken und so die Radbremse 50‴ betätigt wird. Über einen Hydraulikzulauf 51' kann Druckmittel in die Druckkammer 53 gelangen und auch wieder aus dieser austreten.

Es ist ersichtlich, dass in jedem der Kolben 54 ein Dämpfungsbauteil 100 integriert ist. Jedes Dämpfungsbauteil 100 weist drei im Umriss kreisrunde, federelastische Elemente 80a und eine Strömungsquerschnittsverengung 90 auf, die hier lediglich schematisch dargestellt ist. Die federelastischen Elemente 80a sind zudem scheibenartig ausgebildet und nebeneinander angeordnet. Sie können bspw. über eine käfigartige Halterung zusammengehalten werden (nicht dargestellt).

Abweichend von dem in der Fig. 5 dargestellten Dämpfungsbauteil 100 können in jedem Dämpfungsbauteil 100 auch mehr oder weniger der federelastischen Elemente 80a verbaut sein. Des Weiteren ist abweichend von der Darstellung in Fig. 5 denkbar, dass in die Kolben 54 selbst kein Dämpfungsbauteil 100 integriert ist, sondern lediglich innerhalb der Druckkammer 53 die Funktionen eines federelastischen Elementes und einer Strömungsquerschnittsverengung realisiert sind.

### Bezugszeichenliste

- 1: Hydraulikanordnung
- 10: Hauptbremszylinder
- 20: Hydraulikleitung
- 30: elektrohydraulische Regelungseinheit
- 30a: elektrische Steuereinheit (ECU)
- 30b: hydraulische Steuereinheit (HCU)
- 31: Datenbus
- 40a: Bremsleitung
- 40b: Bremsleitung
- 40c: Bremsleitung
- 50, 50', 50", 50‴: Radbremse
- 50a: Bremssattel
- 50b: Bremsscheibe
- 50c, 50c', 50c", 50c‴: Radbremszylinder
- 51, 51': Hydraulikzulauf
- 52: starrer Anschlussstutzen, Banjo
- 53: Druckkammer
- 54: Kolben
- 55: Bremsbacken
- 56: Gehäuse
- 60: Bremspedal
- 70: Vorratsbehälter
- 80: federelastisches Element
- 80a: federelastisches Element
- 90: Strömungsquerschnittsverengung, Blende
- 100: Dämpfungsbauteil
- 110, 110`: Radträger
- 120, 120`: Querlenker
- 130, 130`: elektromechanische Parkbremse

- K: Kraftfahrzeug

## Patentansprüche

1. Hydraulikanordnung (1, 1')eines Kraftfahrzeugs (K), mit wenigstens einer Radbremse (50, 50', 50"), die hydraulisch mit einem Hauptbremszylinder (10) verbunden ist, wobei der Hauptbremszylinder (10) durch Betätigung eines Bremspedals (60) betätigbar und dadurch ein Druckmittel zum Aufbau eines Bremsdrucks in einen Radbremszylinder (50c, 50c`, 50c", 50c‴) der Radbremse (50, 50', 50",50‴) überführbar ist, wobei in der zwischen dem Hauptbremszylinder (10) und der Radbremse (50, 50', 50",50‴) bestehenden, hydraulischen Wirkverbindung wenigstens ein federelastisches Element (80) angeordnet ist, welches in Kontakt mit dem Druckmittel steht und in der zwischen dem Hauptbremszylinder (10) und der Radbremse (50, 50', 50",50‴) bestehenden, hydraulischen Wirkverbindung zusätzlich wenigstens eine Strömungsquerschnittsverengung (90) vorhanden ist, **dadurch gekennzeichnet, dass** das federelastische Element (80) und die Strömungsquerschnittsverengung (90) in einem gemeinsamen Dämpfungsbauteil (100) integriert sind, wobei das Dämpfungsbauteil (100) in einer hydraulischen Wirkverbindung zwischen einer elektrohydraulischen Regelungseinheit (30) und der Radbremse (50, 50', 50",50‴) angeordnet und in einem starren Anschlussstutzen (52) angeordnet ist, welcher eine flexible Bremsleitung (40c) mit einem Hydraulikzulauf (51) des Radbremszylinders (50c") verbindet.

2. Hydraulikanordnung (1') nach Anspruch 1, **dadurch gekennzeichnet, dass** durch das federelastische Element (80) auch die Strömungsquerschnittsverengung (90) ausgebildet wird.

3. Hydraulikanordnung (1, 1') nach einem der vorhergehenden Ansprüche, **dadurch gekennzeichnet, dass** das Dämpfungsbauteil (100) wenigstens ein im Umriss kreisrundes, federelastisches Element (80a) aufweist.

4. Hydraulikanordnung (1, 1') nach Anspruch 3, **dadurch gekennzeichnet, dass** das Dämpfungsbauteil (100) mehrere im Umriss kreisrunde, federelastische Elemente (80a) aufweist, die nebeneinander angeordnet sind.

5. Kraftfahrzeug (K), **gekennzeichnet durch** wenigstens eine Hydraulikanordnung (1, 1') nach einem der vorhergehenden Ansprüche.

## Claims

1. Hydraulic arrangement (1, 1') of a motor vehicle (K), with at least one wheel brake (50, 50', 50'') which is connected to a brake master cylinder (10), it being possible for the brake master cylinder (10) to be actuated by way of actuation of a brake pedal (60) and, as a result, for a pressure medium for building up a brake pressure to be transferred into a wheel brake cylinder (50c, 50c', 50c'', 50c‴) of the wheel brake (50, 50', 50'', 50'''), at least one resilient element (80) being arranged in the hydraulic operative connection which exists between the brake master cylinder (10) and the wheel brake (50, 50', 50", 50‴), which element (80) is in contact with the pressure medium, and there additionally being at least one flow cross-sectional constriction (90) in the hydraulic operative connection which exists between the brake master cylinder (10) and the wheel brake (50, 50', 50'', 50‴), **characterized in that** the resilient element (80) and the flow cross-sectional constriction (90) are integrated into a common damping component (100), the damping component (100) being arranged in a hydraulic operative connection between an electrohydraulic regulating unit (30) and the wheel brake (50, 50', 50'', 50‴) and being arranged in a rigid connector stub (52) which connects a flexible brake line (40c) to a hydraulic feed line (51) of the wheel brake cylinder (50c'').

2. Hydraulic arrangement (1') according to Claim 1, **characterized in that** the flow cross-sectional constriction (90) is also configured by way of the resilient element (80).

3. Hydraulic arrangement (1, 1') according to either of the preceding claims, **characterized in that** the damping component (100) has at least one resilient element (80a) which is circular in outline.

4. Hydraulic arrangement (1, 1') according to Claim 3, **characterized in that** the damping component (100) has a plurality of resilient elements (80a) which are circular in outline and are arranged next to one another.

5. Motor vehicle (K), **characterized by** at least one hydraulic arrangement (1, 1') according to one of the preceding claims.

## Revendications

1. Agencement hydraulique (1, 1') d'un véhicule automobile (K), avec au moins un frein de roue (50, 50', 50") qui est relié hydrauliquement à un maître-cylindre de frein (10), le maître-cylindre de frein (10) pouvant être actionné par l'actionnement d'une pédale de frein (60) et un fluide sous pression destiné à établir une pression de freinage pouvant ainsi être transféré dans un cylindre de frein de roue (50c, 50c', 50c'', 50c''') du frein de roue (50, 50', 50'', 50'''), au moins un élément élastique (80) étant agencé dans la liaison active hydraulique existant entre le maître-cylindre de frein (10) et le frein de roue (50, 50', 50", 50‴), lequel élément élastique est en contact avec le fluide sous pression et, au moins un rétrécissement de section transversale d'écoulement (90) étant en outre présent dans la liaison active hydraulique existant entre le maître-cylindre de frein (10) et le frein de roue (50, 50', 50", 50‴), **caractérisé en ce que** l'élément élastique (80) et le rétrécissement de section transversale d'écoulement (90) sont intégrés dans un composant d'amortissement commun (100), le composant d'amortissement (100) étant agencé dans une liaison active hydraulique entre une unité de régulation électrohydraulique (30) et le frein de roue (50, 50', 50'', 50''') et étant agencé dans un raccord rigide (52) qui relie une conduite de frein flexible (40c) à une arrivée hydraulique (51) du cylindre de frein de roue (50c'').

2. Agencement hydraulique (1') selon la revendication 1, **caractérisé en ce que** l'élément élastique (80) forme également le rétrécissement de section transversale d'écoulement (90).

3. Agencement hydraulique (1, 1') selon l'une quelconque des revendications précédentes, **caractérisé en ce que** le composant d'amortissement (100) présente au moins un élément élastique (80a) de contour circulaire.

4. Agencement hydraulique (1, 1') selon la revendication 3, **caractérisé en ce que** le composant d'amortissement (100) présente plusieurs éléments élastiques (80a) de contour circulaire, agencés côte à côte.

5. Véhicule automobile (K), **caractérisé par** au moins un agencement hydraulique (1, 1') selon l'une quelconque des revendications précédentes.
